Europäisches Patentamt

European Patent Office

Office européen des brevets

(19)

(11) **EP 0 483 914 B1**

## (12) FASCICULE DE BREVET EUROPEEN

(45) Date de publication et mention
de la délivrance du brevet:
**13.08.1997 Bulletin 1997/33**

(51) Int Cl.[6]: **G06T 7/20**, G01S 3/786

(21) Numéro de dépôt: **91202762.0**

(22) Date de dépôt: **24.10.1991**

(54) **Dispositif de détection sélective d'objet mobile**

Vorrichtung zur selektiven Auffindung eines sich bewegenden Objekts

Moving object selective detection device

(84) Etats contractants désignés:
**DE FR GB**

(30) Priorité: **30.10.1990 FR 9013442**

(43) Date de publication de la demande:
**06.05.1992 Bulletin 1992/19**

(73) Titulaires:
- **LABORATOIRES D'ELECTRONIQUE PHILIPS S.A.S.**
  **94450 Limeil-Brévannes (FR)**
  Etats contractants désignés:
  **FR**
- **Philips Electronics N.V.**
  **5621 BA Eindhoven (NL)**
  Etats contractants désignés:
  **DE GB**

(72) Inventeur: **Florent, Raoul, Société Civile S.P.I.D.**
**F-75008 Paris (FR)**

(74) Mandataire: **Landousy, Christian et al**
**Société Civile S.P.I.D.**
**156, Boulevard Haussmann**
**75008 Paris (FR)**

(56) Documents cités:
- **COMPUTER VISION GRAPHICS AND IMAGE PROCESSING. vol. 49, no. 3, Mars 1990, NEW YORK US pages 283 - 296; A.M. BRUCKSTEIN: 'on minimal energy trajectories'**
- **PROCEEDINGS OF SPIE-THE INTERNATIONAL SOCIETY FOR OPTICAL ENGINEERING - APPLICATIONS OF ARTIFICIAL INTELLIGENCE VI vol. 937, 6 Avril 1988, ORLANDO US pages 505 - 511; D. THOMAS ET AL.: 'Motion filtering for target extraction and tracking in infrared images'**

# Description

L'invention concerne un dispositif pour fournir un signal de sélection, indiquant la détection sélective d'objets physiques sur la base de leur mouvement selon une trajectoire.

L'invention trouve son application dans, par exemple, les systèmes de surveillance, ou dans les dispositifs pour prévenir les collisions avec des objets mobiles tels que des voitures.

Le problème technique qui se pose à l'homme du métier dans la mise en oeuvre d'algorithmes de suivi de mouvements par exemple, est de disposer d'un dispositif capable, à partir d'un ensemble de coordonnées spaciales, de fournir une mesure de confiance permettant de décider, si cet ensemble de coordonnées peut être vu comme émanant d'un objet se déplaçant de façon cohérente, relativement à un critère que l'on se donne, ou non, et si cet objet doit être sélectionné ou non.

Il est déjà connu de l'état de la technique un procédé de filtrage pour effectuer le suivi et l'extraction de cibles en mouvement, par la publication intitulée "Motion Filtering for Target Extraction and Tracking in Infrared Images", par David THOMAS et alii, dans "Proceedings of SPIE, Vol.937, Applications of Artificial Intelligence VI, 4-6 April 1988, Orlando, FLORIDA, USA".

Ce document décrit un procédé qui s'applique aux images infrarouge, lesquelles ont une faible résolution et un faible contraste, défauts qui rendent difficiles le suivi et l'extraction de cibles en mouvement. Ce procédé est fondé sur l'utilisation d'une hypothèse selon laquelle le mouvement de la cible est continu. Cette approche exploite le fait que, dû aux moments d'inertie, les objets physiques tendent à se déplacer dans un espace à trois dimensions selon des chemins unis (smooth). La projection de chemins unis de l'espace à trois dimensions vers un espace à 2 dimensions résulte en trajectoires unies (smooth).

Le filtre de mouvement proposé par l'enseignement du document cité est fondé sur le fait que les objets physiques se meuvent de manière unie et continue, tandis que les objets autres que les cibles (bruits) ont des mouvements irréguliers. Ce filtre s'applique aux objets en mouvement uni et continu.

Ce filtre est réalisé en se donnant A PRIORI une distance maximale parcourue par une cible potentielle entre deux images d'une séquence d'images, un angle de déviation maximale par rapport à une trajectoire unie, un changement de vitesse, et des poids. Une fonction de cohérence de trajectoire est fournie. La cible suivie est celle qui obéit le mieux à cette fonction de cohérence, c'est-à-dire qui a la trajectoire la plus unie.

Il est également déjà connu de l'état de la technique, des critères, par exemple le critère utilisé dans le filtrage dit de Kalman, fondés sur la prédiction de la trajectoire. Ainsi, selon ce critère, on se donne un modèle de trajectoire et à partir des coordonnées que l'on reçoit, on bâtit une prédiction des prochaines coordonnées, c'est-à-dire une prédiction de la position du prochain point ; on évalue la différence entre la valeur estimée et la valeur effective des coordonnées de ce point, et on mesure ainsi l'énergie de l'erreur de prédiction. Si cette énergie est petite, l'homme du métier peut estimer le mouvement, c'est-à-dire qu'il décrètera qu'il a affaire à un mobile ayant un mouvement cohérent parce que prédictible. Si cette énergie est grande l'homme du métier décrètera qu'il s'agit d'un mouvement incohérent, parce que non prédictible selon le modèle de déplacement choisi.

Cependant, si l'on se place dans le cas où l'on à affaire à des coordonnées qui proviennent d'objets assez étendus, et qui se déplacent de façon assez lente, ou qui proviennent d'un extracteur peu fiable, les dispositifs mettant en oeuvre des mesures fondées sur la prédiction ne donnent pas de bons résultats. En effet, dans le cas cité, l'incertitude sur les mesures peut être de l'ordre de l'étendue de ces déplacements et l'on a souvent affaire, dû à l'incertitude sur les coordonnées, à ce qui semble être un mouvement incohérent émaillé de nombreux demi-tours.

Le but de la présente invention est de proposer un dispositif capable de sélectionner des objets sur la base de leur efficacité de mouvement.

Selon l'invention, ce but est atteint au moyen d'un dispositif tel que défini dans le préambule, ce dispositif comprenant : des premiers moyens avec une première sortie pour un signal dit de déplacement en ligne droite représentatif d'une quantité mesurée du déplacement en ligne droite de l'objet entre deux points de la trajectoire, ces points étant repérés à deux instants donnés séparés par un premier intervalle de temps, des seconds moyens avec une seconde sortie pour un signal dit de distance effective représentatif de la somme des distances mesurées effectivement parcourues par l'objet durant des sous-intervalles de temps dudit premier intervalle de temps, des moyens de comparaison ayant des entrées couplées pour recevoir le signal de déplacement en ligne droite et le signal de distance effective, et une sortie dite de sélection pour fournir un signal dit de sélection qui indique une sélection lorsque l'énergie du signal de déplacement en ligne droite excède une fraction prédéterminée de l'énergie du signal de distance effective.

Si l'on regarde l'objet mobile sur une échelle de temps suffisante, il apparaît que, bien que parfois soumis à des allers et retours, cet objet tend néanmoins à évoluer dans une direction donnée, c'est-à-dire à avoir un déplacement que l'on nomme efficace.

Ceci est utilisé pour la détection sélective. Les première et seconde mesures peuvent se fonder par exemple sur les données de position acquises à partir d'images successives dans lesquelles l'objet apparaît, ou bien à partir d'observation de sa vitesse par exemple en utilisant l'effet Doppler. Les première et seconde mesures peuvent donc utiliser des sources d'acquisition différentes pour la mesure des déplacements et des distances respectivement.

Ce dispositif présente entre autres les avantages suivants :

- il réalise une sélection applicable aux mobiles lents et non ponctuels ;
- la sélection est valide même dans le cas où l'extracteur fournit des données imprécises, c'est-à-dire par exemple lorsque les coordonnées ne sont connues qu'avec une précision de l'ordre de grandeur des déplacements élémentaires ;
- la mesure est indépendante de tout facteur d'échelle. Ainsi, si l'on dilate le diagramme représentant la trajectoire de l'objet mobile, ou si l'on contracte ce diagramme, le rapport entre les distances reste constant. Par ailleurs, un mobile plus rapide, mais qui ne se déplace pas plus efficacement, fournira la même mesure qu'un mobile lent.
- la mesure pénalise néanmoins les mouvements décrétés non significatifs ;

Dans une réalisation particulière, ce dispositif est caractérisé en ce que les signaux de déplacement en ligne droite et de distance effective étant dépendants du temps, comme fonctions de la position dans le temps de l'intervalle de temps, les moyens de comparaison comprennent : des moyens pour déterminer l'efficacité de mouvement, ayant des entrées couplées pour recevoir le signal de déplacement en ligne droite et le signal de distance effective et une sortie dite d'efficacité de mouvement pour fournir un signal d'efficacité de mouvement qui est le rapport du signal de déplacement en ligne droite et du signal de distance effective, des moyens pour effectuer une moyenne, ayant une entrée couplée pour recevoir le signal d'efficacité de mouvement et une sortie dite de moyenne pour fournir un signal correspondant à la moyenne de l'efficacité de mouvement sur un dit second intervalle de temps plus large, des moyens de comparaison des moyennes ayant une entrée couplée pour recevoir la moyenne de l'efficacité de mouvement et une sortie pour fournir le signal dit de détection lorsque la moyenne excède un seuil prédétermine.

L'avantage est que la mesure reste valide dans le cas où le mobile effectue des demi-tours en peu de temps. Quand l'objet est capable de se mouvoir dans un espace multidimensionnel, la comparaison du déplacement en ligne droite avec la distance effectivement parcourue peut en principe être réalisée en calculant la somme du carré des distances et déplacements le long d'axes de coordonnées séparés et en comparant ces quantités.

Ainsi, ce dispositif présente l'avantage de fournir une mesure qui répond bien au critère d'efficacité de mouvement, lorsque le mobile se déplace de façon efficace dans au moins une direction parallèle à un des axes de coordonnées.

Par exemple, dans un espace à deux dimensions, ce dispositif permettra de décréter qu'un mobile affecté d'un mouvement sinusoïdal dans une des deux directions, a un mouvement efficace. Il suffit pour cela que la période de la sinusoïde soit suffisamment grande devant l'amplitude.

Ce dispositif suit également bien les mobiles dans les demi-tours, non seulement du fait qu'il prend en compte les composantes des distances selon les axes de coordonnées, mais aussi du fait qu'il permet l'intégration de la mesure sur un laps de temps donné. En effet, si l'on ne considérait qu'une mesure élémentaire, c'est-à-dire celle qui regarde l'évolution du mobile entre deux instants successifs, cette mesure deviendrait fausse dans le cas d'un demi-tour. Au contraire en intégrant la mesure sur un laps de temps couvrant un nombre suffisant de mesures élémentaires successives, l'effet du demi-tour est gommé.

L'invention est décrite ci-après en détail, en référence avec les figures annexées dont :

- la figure 1 qui représente un exemple de trajectoire $L_2$ telle que détectée par un extracteur de coordonnées, et la trajectoire $L_1$ en ligne droite qui lui correspond ;
- la figure 2 qui représente la décomposition des distances entre des points sur une trajectoire, selon deux axes du plan d'étude de la trajectoire ;
- la figure 3 qui représente les moyens de traitement des composantes selon ces deux axes de coordonnée, assemblés pour former un dispositif de mesure d'efficacité de mouvement.

Selon l'invention, on s'est fixé pour but de réaliser un dispositif de mesure en temps réel de l'efficacité de mouvement d'un mobile sur une trajectoire, dans une séquence d'images, ce dispositif étant muni de moyens pour répondre aux critères suivants :

- réaliser une moyenne de l'efficacité de mouvement entre deux instants séparés par un premier laps de temps $\tau_1$,
- réaliser une mesure indépendante de tout facteur d'échelle ;
- réaliser une mesure qui pénalise les déplacements jugés non significatifs ;
- réaliser une mesure applicable aux mobiles lents, et non ponctuels ;
- réaliser une mesure qui reste valide lorsque le mobile effectue des demi-tours.

Par mobile lents, il faut entendre des mobiles dont le déplacement est de l'ordre de quelques pixels dans le temps qui sépare deux images consécutives.

Le dispositif de mesure en temps réel de l'efficacité de mouvement d'un mobile évoluant sur une trajectoire T, dans une séquence d'images, repose sur l'algorithme défini ci-après.

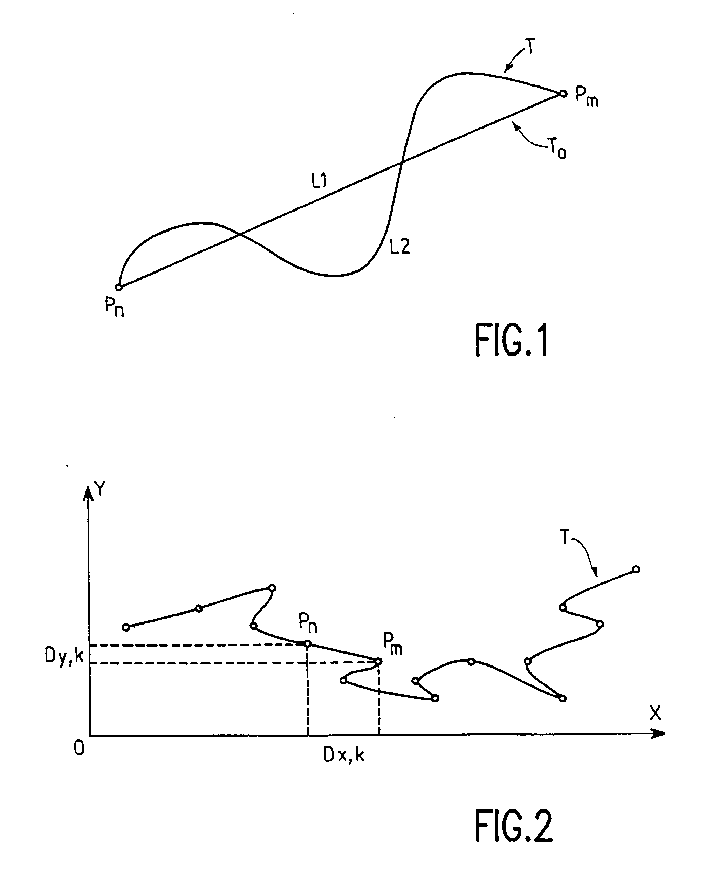

En référence avec la figure 1, on définit d'abord la notion d'efficacité de mouvement. L'efficacité de mouvement est le rapport entre la distance $L_1$ mesurée en ligne droite entre deux points $P_n$ et $P_m$ de la trajectoire T, ces points étant repérés à deux instants donnés séparés par un laps de temps $\tau_1$, et la distance $L_2$ effectivement parcourue par le mobile sur cette trajectoire T pendant ce laps de temps.

En référence avec la figure 2, et pour des raisons de robustesse des mesures et de rapidité des calculs, le déplacement élémentaire $P_n\,P_m$ sur la trajectoire T est décomposé en ses deux composantes selon deux axes de coordonnées spaciales planes de l'image, par exemple deux axes de cordonnées orthogonales $\overrightarrow{OX}$ et $\overrightarrow{OY}$. Les composantes de $P_n\text{-}P_m$ respectivement sont $\overrightarrow{OX}$ et $\overrightarrow{OY}$ sont notées ci-après $D_{x,k}$ et $D_{y,k}$ où k est un indice qui peut varier au cours du temps. Ainsi, on dira qu'un mobile se déplace de manière efficace, s'il se déplace de manière efficace dans au moins une direction $\overrightarrow{OX}$ ou $\overrightarrow{OY}$.

En référence avec la figure 2, on considère un espace à deux dimensions ; c'est pourquoi, on définit deux axes de coordonnées, ce qui amène à étudier les deux composantes d'un déplacement selon ces deux axes. On notera que, si nécessaire, l'espace considéré peut être multidimensionnel, par exemple à N dimensions ; on définira alors M axes de coordonnées, et on considèrera les N composantes d'un déplacement selon ces N axes.

Si l'on considère une mesure élémentaire du déplacement du mobile sur la trajectoire T, c'est-à-dire une mesure entre deux instants consécutifs séparant deux images consécutives en temps réel, il apparaît des difficultés lorsque la trajectoire présente des irrégularités comme montré sur la figure 2. C'est pourquoi, selon l'invention la mesure de l'efficacité de mouvement est faite sur un laps de temps $\tau_1$ couvrant plusieurs déplacements élémentaires du mobile par exemple un nombre $n_1$, de manière à prendre en compte l'effet des irrégularités de trajectoire.

Dans ce cas, il en résulte que la mesure d'efficacité de mouvement appliquée à une trajectoire T, telle que montrée sur la figure 2, comprend une somme de déplacements dont l'implémentation pose des problèmes.

Selon l'invention, ces problèmes sont résolus en remplaçant les sommations exactes sur une période de temps finie, par des sommations pondérées sur une période de temps infinie. Les sommation pondérées peuvent alors être implémentées de façon simple comme il sera décrit ultérieurement. Il s'ensuit que les sommes utilisées dans la mesure ne sont pas des sommes exactes (mais des sommes pondérées) et que ces opérations fournissent une approximation de la mesure des distances. Afin de rendre la mesure de la distance en ligne droite $L_1$ et la mesure de la distance effectivement parcourue $L_2$, cohérentes, on utilisera la même forme d'implémentation pour l'une et l'autre mesure.

D'autre part, la séquence d'images à étudier peut comprendre, outre le (ou les) mobile(s), des cibles quasistatiques que l'on ne veut pas détecter.

Selon l'invention, on se propose de pénaliser les informations, c'est-à-dire les coordonnées des points correspondant à ces cibles dont le mouvement est trop faible, c'est-à-dire non significatif.

D'autre part, on rappelle que selon l'invention, on s'est fixé pour but de réaliser un dispositif fournissant une mesure d'efficacité de mouvement qui ne dépend pas d'un facteur d'échelle. Ces deux conditions paraissent contradictoires.

La difficulté de résoudre simultanément ces deux problèmes est levée en dotant le dispositif de moyens pour apprécier si un déplacement donné peut être, ou non, considéré comme significatif. Par déplacement significatif, il faut donc entendre ceux dont la grandeur est supérieure a une valeur donnée ou seuil. En dessous de la valeur du seuil, les déplacements seront considérés comme nuls, et au-dessus de la valeur du seuil, ils seront considérés comme significatifs. Ainsi, le dispositif permet de dénombrer les déplacements significatifs.

En outre, on rappelle que selon l'invention, on s'est fixé pour but de réaliser un dispositif fournissant une moyenne de l'efficacité de mouvement. Ce problème est résolu en pondérant la mesure de l'efficacité de mouvement par le nombre moyen de déplacements significatifs. Le nombre moyen des déplacements significatifs est lui-même obtenu en réalisant la sommation pondérée, selon le critère défini précédemment relativement aux sommations de déplacements, du dénombrement des déplacements significatifs.

On obtient alors une mesure valide de la moyenne de l'efficacité de mouvement. Cependant il apparaît que dansle cas où le mobile effectuerait un (des) demi-tour (s), cette mesure deviendrait fausse. Par demi-tour, on entend tout changement de cap brusque. Selon l'invention, on intègre cette mesure sur un second laps de temps $\tau_2$ supérieur à $\tau_1$. Ainsi, on prend en compte le problème lié aux demi-tours et la mesure effectuée par le dispositif reste robuste à d'éventuelles irrégularités de trajectoire.

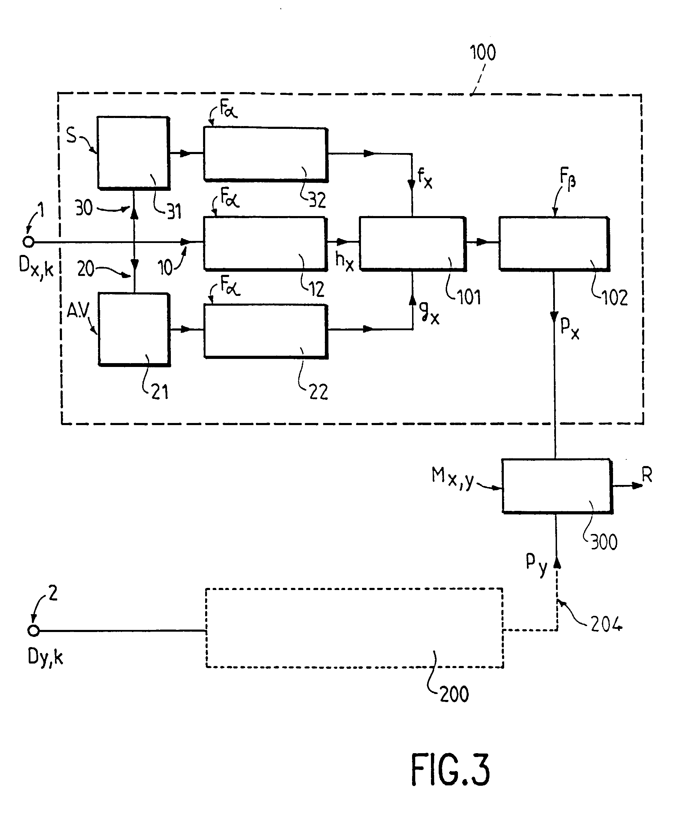

Pour implémenter l'algorithme décrit plus haut, le dispositif de mesure comporte d'abord un nombre N de branches égal au nombre N de dimensions, de l'espace considéré. En référence avec la figure 3, relative à un espace à deux dimensions, le dispositif de mesure comporte deux branches respectivement 100 et 200. La première branche 100 reçoit au noeud d'entrée 1, les mesures des coordonnées $D_{x,k}$ selon l'axe $\overrightarrow{OX}$, la seconde branche 200 reçoit au noeud d'entrée 2, les mesures des coordonnées $D_{y,k}$ selon l'axe $\overrightarrow{OY}$. Les mesures des coordonnées $D_{x,k}$ et $D_{y,k}$ sont fournies par un extracteur connu de l'homme du métier, extracteur qui ne fait pas à proprement parler partie de l'invention. Un dispositif à N branches recevrait sur ces dernières respectivement les mesures des coordonnées selon les N axes de l'espace, notées s(k).

Chaque branche 100, ou 200, est constituée de moyens, ou blocs effectuant des fonctions, identiques.

Il en serait de même si le dispositif comportait M branches. On décrira donc seulement en détail la branche 100 alimentée par les mesures $D_{x,k}$ selon l'axe $\overrightarrow{OX}$.

la branche 100 comprend elle-même d'abord trois branches parallèles :

- une première branche 10, représentée par la branche médiane sur la figure 3 ; cette branche 10 réalise la distance $L_1$, c'est-à-dire la distance parcourue en ligne droite, en référence avec la figure 1 ;
- une seconde branche 20, représentée par la branche inférieure du bloc 100, sur la figure 3 ; cette branche réalise la distance effectivement parcourue $L_2$, dans le même laps de temps $\tau_1$ que $L_1$ ;
- une troisième branche 30, représentée par la branche supérieure du bloc 100 sur la figure 3 ; cette branche réalise la moyenne du nombre des déplacements significatifs.

La branche 10, ou branche médiane sur la figure 3, est couplée à l'entrée 1 pour recevoir les mesures $D_{x,k}$ selon l'axe $\overrightarrow{OX}$, et comprend un bloc 12 constitué d'un filtre $F_\alpha$ récursif du 1er ordre, défini par un facteur d'oubli $\alpha$. Ce filtre reçoit le flux des données $D_{x,k}$ invariant. Le coefficient $\alpha$ est lié au laps de temps $\tau_1$ sur lequel on intègre la mesure, ou encore au nombre d'images $n_1$ réalisées pendant le laps de temps $\tau_1$. Ce nombre d'images $n_1$ correspond à l'erreur minimal que l'on peut obtenir entre la valeur approchée fournie par le dispositif et une moyenne exacte sur $n_1$ mesures. Dans ces conditions, le filtre linéaire $F_\alpha$ utilisé dans la branche 10 réalise le calcul exprimé par la relation (1) :

$$h(k) = \alpha.h(k\text{-}1) + D_{x,k} \qquad (1)$$

Ainsi, à l'issue d'un calcul à l'ordre (k-1), le filtre récursif $F_\alpha$ prend sa sortie h(k-1) et la réinjecte à son entrée 1 en la multipliant par $\alpha$. Il en résulte que, par le calcul ultérieur à l'ordre (k), sa sortie h(k) est la somme de $\alpha$.h(k-1) et de l'entrée arrivant à l'ordre k, qui est $D_{x,k}$.

Dans le cas d'un dispositif à N branches principales, la relation 1 s'écrirait pour chaque branche principale :

$$h(k) = \alpha.h(k\text{-}1) + s(k) \qquad (1bis)$$

On a défini plus haut $\alpha$ comme un facteur d'oubli appliqué au filtre $F_\alpha$. On entend par facteur d'oubli, un facteur $\alpha$ tel que :

$$0 < \alpha < 1 \qquad (2)$$

Par ce facteur, la somme (1) comprend un premier facteur $\alpha$.h(k-1), qui est un facteur "diminué". Si l'on développe l'expression de la somme (1), des sommes des facteurs diminués apparaissent clairement comme le montre la relation (3) :

$$h(k) = D_{x,k} + \alpha.D_{x,k\text{-}1} + \alpha^2 D_{x,k\text{-}2} \qquad (3)$$

Les termes de cette somme dans la relation (3) sont d'autant plus diminués que la puissance affectant le coefficient $\alpha$ est grande. D'où la notion de facteur d'oubli.

Il existe néanmoins une analogie entre cette sommation dans la relation (3) et une sommation exacte sur une période de temps finie. En effet, la sommation (3) est une sommation pondérée sur une période de temps infinie, du fait que les termes de la sommation tendent vers zéro quand l'exposant du facteur d'oubli $\alpha$ tend vers l'infini. Par le moyen du filtre récursif $F_\alpha$ du 1er ordre, ayant un coefficient d'oubli $\alpha$, on a donc une possibilité de réaliser d'une façon simple l'implémentation d'une somme, avec une certaine approximation qui dépend de $\alpha$, et donc du nombre $n_1$ d'images sur lequel on intègre la mesure. La sortie h(k) du bloc 12 est notée $h_x$ sur la figure (3) pour le bloc 100 correspondant aux entrées $D_{x,k}$. La relation (4) donne la valeur du coefficient $\alpha$ du filtre $F_\alpha$ qui réalise la meilleure approximation au sens des moindres carrés d'une somme finie sur $n_1$ éléments d'un signal $D_{x,k}$ constant pour une sommation pondérée infinie réalisée par filtrage par ce filtre $F_\alpha$ de ce signal :

$$n_1 = 1 + 2\frac{L_n(1+\alpha)}{(\text{-}L_n\alpha)} \qquad (4)$$

La branche 20, ou branche inférieure sur la figure 3 est couplée à l'entrée 1 pour recevoir les mesures $D_{x,k}$ selon l'axe $\overrightarrow{OX}$, et comprend d'abord un bloc 21 constitué par un circuit de valeur absolue A.V. Ce circuit 21 peut être constitué par une mémoire réalisant la fonction affine valeur absolue A.V. (par exemple une L.U.T., de l'anglais Look-Up-TABLE).

La branche 20 comprend ensuite, en sortie du circuit 21 de valeur absolue A.V., un bloc 22 constitué par un filtre $F_\alpha$ identique au filtre récursif du 1er ordre décrit précédemment en référence avec la première branche 10, ou branche médiane de la figure 3. La sortie $g_x$ du bloc 22 de la branche 20 fournit donc la somme des valeurs absolues des distances $D_{x,k}$ parcourues, ce qui réalise la distance effectivement parcourue $L_2$ durant le laps de temps $\tau_1$, sur un nombre d'images prédéterminé $n_1$. En effet, dans le cas où la trajectoire T, en référence avec la figure 2, comprend des irrégularités telles qu'elle revient sur elle-même, la distance effectivement parcourue par le mobile comprend la somme du trajet aller et du trajet retour. D'autre part le filtre $F_\alpha$ de la seconde branche 20, est identique au filtre de la première branche 10, c'est-à-dire affecté du même coefficient d'oubli $\alpha$, de manière à obtenir dans l'une et l'autre branche, respectivement la première 10 et la seconde 20, des approximations cohérentes sur le calcul des distances respectivement $L_1$, distance en ligne droite, et $L_2$ distance effectivement parcourue.

La branche 30, ou branche inférieure en référence avec la figure 3, est couplée à l'entrée 1 pour recevoir les mesures $D_{x,k}$ selon l'axe $\overrightarrow{OX}$, et comprend d'abord un bloc 31 effectuant un seuillage S de la mesure d'entrée $D_{x,k}$. Ce bloc 31 peut être constitué par un circuit mémoire réalisant la fonction de seuillage S (par exemple une L.U.T. de l'anglais LOOK-UP-TABLE). Dans un exemple, ce circuit de seuillage S peut faire en sorte que, au-dessus d'un seuil fixé A PRIORI à 0,5 pixel, le déplacement est alors considéré comme significatif, et le circuit de seuillage fournit une sortie égale à un 1. Ou, au dessous du seuil, le déplacement est alors considéré comme négligeable, et le circuit de seuillage fournit une sortie égale à un O. Il en résulte qu'à la sortie du bloc de seuillage 31, on dispose d'une suite de 0 et de 1, que l'on applique alors à l'entrée d'un bloc 32 constitué par un filtre $F_\alpha$ identique à ceux des branches 10 et 20 précédemment décrites. Ce bloc 32 effectue une sommation pondérée des déplacements significatifs et fournit la sortie $f_x$ qui est le nombre moyen des déplacements significatifs, durant le laps de temps $\tau_1$, intégré sur le nombre d'images $n_1$.

On dispose alors à la sortie des trois filtres $F_\alpha$ récursifs du premier ordre, respectivement 12, 22 et 32, de tous les éléments utiles pour bâtir la première étape de la mesure, c est-à-dire la moyenne de l'efficacité de mouvement entre deux instants séparés par le laps de temps $\tau_1$.

On réalise à cet effet le produit de la moyenne des déplacements significatifs, par la valeur absolue du déplacement en ligne droite, divisé par le déplacement effectif. Cette relation s'écrit (5) :

$$f_x \; x \; \left| \frac{h_x}{g_x} \right| \qquad (5)$$

Cette opération est implémentée simplement par le bloc 101, en référence avec la figure 3, qui comprend un circuit de multiplication, un circuit de division et un circuit de valeur absolue. Ce bloc 101 reçoit les fonctions $f_x$, $h_x$ et $g_x$ et fournit en sortie une mesure de la moyenne de l'efficacité de mouvement entre deux instants séparés par le laps de temps $\tau_1$ qui correspond au facteur d'oubli $\alpha$.

On se propose ensuite d'intégrer cette mesure sur une échelle de temps supérieure de manière à prendre en compte les problèmes liés aux demi-tours. Cette intégration est réalisée, en référence avec la figure 3, au moyen du bloc 102, constitué par un filtre $F_\beta$ récursif du 1er ordre, ayant un facteur d'oubli $\beta$ tel que $0 < \beta < 1$.

Ce filtre $F_\beta$ est choisi avec une structure semblable à celles des filtres $F_\alpha$ déjà décrite. Cependant comme une autre échelle de temps est considérée, le facteur $\beta$ est différent du facteur $\alpha$.

En sortie du bloc 102, constitué par le filtre $F_\beta$, on dispose du signal $p_x$ qui est une moyenne de l'efficacité de mouvement observée entre deux instants donnés séparés par un laps de temps $\tau_1$ correspondant au facteur $\alpha$, cette moyenne correspondant elle-même à un temps d'intégration $\tau_2$ correspondant au facteur $\beta$.

En référence avec la figure 3, les mesures $D_{y,k}$ selon l'axe $\overrightarrow{OY}$ (voir la figure 2) sont par ailleurs appliquées à l'entrée 2 de la branche 200. Cette branche comprend des blocs identiques à ceux de la branche 100, et identiquement connectés. Cette branche 200 fournit en sortie une mesure $p_y$ qui est la moyenne de l'efficacité de mouvement dans les mêmes conditions que $p_x$. Dans un espace à M dimensions, on disposera par analogie de N signaux p.

Les sorties respectivement $p_x$ et $p_y$ des branches 100 et 200 sont appliquées sur un bloc 300 qui réalise la fonction "maximum de $p_x$ et de $p_y$" notée $M_{x,y}$. Ce bloc 300 peut être constitué d'un circuit classique de maximum. Dans un espace à N dimensions, le bloc 300 réalisera la fonction "maximum" de tous les signaux p.

La sortie R du bloc de maximum 300 constitue la mesure d'efficacité de déplacement recherchée.

Elle trouve son application, par exemple, dans le traitement de séquences d'images, en temps réel, appliqué notamment au suivi d'objets mobiles lents et non ponctuels.

## Revendications

1. Dispositif pour fournir un signal de sélection, indiquant la détection sélective d'objets physiques sur la base de leur mouvement selon une trajectoire (T), comprenant :

   - des premiers moyens (10) avec une première sortie pour un signal (hx, hy) dit de déplacement en ligne droite représentatif d'une quantité mesurée du déplacement (L1) en ligne droite de l'objet entre deux points ($P_n$, $P_m$) de la trajectoire (T), ces points étant repérés à deux instants donnés séparés par un premier intervalle de temps ($\tau$1),
   - des seconds moyens (20) avec une seconde sortie pour un signal (gx, gy) dit de distance effective (L2) représentatif de la somme des distances mesurées effectivement parcourues par l'objet durant des sous-intervalles de temps dudit premier intervalle de temps ($\tau$1),
   - des moyens de comparaison (101,102,300) ayant des entrées couplées pour recevoir le signal (hx, hy) de déplacement en ligne droite (L1) et le signal (gx, gy) de distance effective (L2), et une sortie dite de sélection pour fournir un signal (R) dit de sélection qui indique une sélection lorsque l'énergie du signal de déplacement en ligne droite excède une fraction prédéterminée de l'énergie du signal de distance effective.

2. Dispositif selon la revendication 1, caractérisé en ce que les signaux de déplacement en ligne droite et de distance effective étant dépendants du temps, comme fonctions de la position dans le temps de l'intervalle de temps, les moyens de comparaison comprennent :

   - des moyens (101) pour déterminer l'efficacité de mouvement, ayant des entrées couplées pour recevoir le signal (hx, hy) de déplacement en ligne droite (L1) et le signal (gx, gy) de distance effective (L2) et une sortie dite d'efficacité de mouvement pour fournir un signal d'efficacité de mouvement qui est le rapport du signal (hx, hy) de déplacement en ligne droite et du signal (gx, gy) de distance effective,
   - des moyens (102) pour effectuer une moyenne (px, py), ayant une entrée couplée pour recevoir le signal d'efficacité de mouvement et une sortie dite de moyenne pour fournir un signal correspondant à la moyenne de l'efficacité de mouvement sur un dit second intervalle de temps plus large,
   - des moyens de comparaison (300) des moyennes ayant une entrée couplée pour recevoir la moyenne (px, py) de l'efficacité de mouvement et une sortie pour fournir le signal (R) dit de sélection lorsque la moyenne excède un seuil prédéterminé.

3. Dispositif selon la revendication 2, caractérisé en ce qu'il comprend :

   - des moyens (30) de détection des déplacements significatifs ayant une sortie pour un signal (fx, fy) dit de déplacement significatif, représentatif du nombre de sous-intervalles de l'intervalle dans lequel l'objet a parcouru au moins une distance minimale prédéterminée,
   - lesdits moyens (101, 102) pour effectuer une moyenne (px, py) ayant une entrée supplémentaire couplée pour recevoir le signal (fx, fy) de déplacement significatif, et étant arrangés (101) pour pondérer le signal d'efficacité de mouvement avec le signal de déplacement significatif.

4. Dispositif selon l'une des revendications 1 à 3, arrangé pour la mesure des mouvements de l'objet dans un espace multidimensionnel, caractérisé en ce qu'il comprend une pluralité (N) de premiers et seconds moyens (100,200...) de mesure couplés respectivement à des moyens de comparaison (300), chacun des premiers et seconds moyens de mesure respectifs de la pluralité étant arrangé pour former les signaux (hx,gx; hy, gy) de déplacement en ligne droite (L1) et de distance effective (L2) pour les déplacement et distance parcourus en projection selon des directions spaciales respectives et en ce qu'il comprend des moyens de combinaison (300) ayant des entrées couplées pour recevoir les signaux de sélection issus respectivement de chaque moyen de comparaison, et une sortie dite de combinaison pour un signal (R) de sélection disponible lorsque au moins un des signaux de sélection respectifs indique la sélection d'un objet.

5. Dispositif selon l'une des revendications 1 à 4, caractérisé en ce que les premiers moyens (10) de mesure comprennent :

   - des moyens de mesure de déplacement élémentaire, ayant une sortie pour fournir un signal dit de déplacement élémentaire, représentatif des déplacements élémentaires de l'objet mesuré dans des intervalles de temps élémentaires respectifs,
   - des moyens (12) d'addition récursive, ayant une entrée couplée pour recevoir le signal de déplacement élémentaire, pour additionner le signal de déplacement élémentaire avec une fraction de la valeur précédente du signal de déplacement élémentaire et ainsi, former par récurrence des valeurs successives du signal (hx, hy) de déplacement en ligne droite (L1).

6. Dispositif selon l'une des revendications 1 à 5, caractérisé en ce que les seconds moyens (20) de mesure comprennent :

   - des moyens de mesure élémentaires ayant une sortie pour fournir un signal dit de distance élémentaire représentatif des distances élémentaires parcourues par l'objet comme mesurées dans des intervalles de temps élémentaires respectifs,
   - des moyens (22) d'addition récursive, ayant une entrée couplée pour recevoir le signal de distance élémentaire, pour additionner le signal de distance élémentaire avec une fraction de la valeur précédente du signal de distance effective, et ainsi former par récurrence des valeurs successives du signal (gx,gy) de distance effective (L2).

7. Dispositif selon l'une des revendications 1 à 6, caractérisé en ce que les moyens pour effectuer la moyenne comprennent des moyens (102) d'addition récursive pour additionner les valeurs successives du signal d'efficacité de mouvement, pondéré par ledit signal de mouvement significatif, et une fraction de la valeur précédente du signal correspondant à la moyenne de l'efficacité de mouvement, et ainsi former des valeurs successives dudit signal correspondant à la moyenne de l'efficacité de mouvement.

**Patentansprüche**

1. Anordnung zur Lieferung eines Selektionssignals, das die selektive Detektion eines physikalischen Objekts auf der Basis seiner Bewegung entlang einer Wegstrecke (T) anzeigt, wobei die Anordnung folgendes umfaßt:

   - erste Mittel (10) mit einem ersten Ausgang für ein sogenanntes Signal (hx, hy) für gradlinige Bewegung, das eine gemessene Größe der geradlinigen Bewegung (L1) des Objekts zwischen zwei Punkten ($P_n$, $P_m$) der Wegstrecke repräsentiert, wobei diese Punkte zu zwei gegebenen, um ein erstes Zeitintervall ($\tau$1) verschobenen Zeitpunkten erfaßt werden,
   - zweite Mittel (20) mit einem zweiten Ausgang für ein sogenanntes Signal (gx, gy) für effektive Distanz (L2), das die Summe der gemessenen Distanzen repräsentiert, die vom Objekt während der Teilzeitintervalle des genannten ersten Zeitintervalls ($\tau$1) effektiv durchlaufen wurden,
   - Vergleichsmittel (101, 102, 300) mit Eingängen, die so gekoppelt sind, daß sie das Signal (hx, hy) für gradlinige Bewegung (L1) und das Signal (gx, gy) für effektive Distanz (L2) empfangen, und einen sogenannten Selektionsausgang, um ein sogenanntes Selektionssignal (R) zu liefern, das eine Selektion anzeigt, wenn die Energie des Signals für gradlinige Bewegung einen vorbestimmten Anteil der Energie des Signals für effektive Distanz überschreitet.

2. Anordnung nach Anspruch 1, dadurch gekennzeichnet, daß, weil die Signale für gradlinige Bewegung und für effektive Distanz als Funktionen der Positionen in der Zeit des Zeitintervalls zeitabhängig sind, die Vergleichsmittel folgendes umfassen:

   - Mittel (101) zur Feststellung der Bewegungseffizienz mit Eingängen, die so gekoppelt sind, daß sie das Signal (hx, hy) für gradlinige Bewegung (L1) und das Signal (gx, gy) für effektive Distanz (L2) empfangen, und mit einem sogenannten Bewegungseffizienzausgang, um ein Bewegungseffizienzsignal zu liefern, das das Verhältnis zwischen dem Signal (hx, hy) für gradlinige Bewegung und dem Signal (gx, gy) für effektive Distanz darstellt,

   - Mittel (102) zur Bildung eines Mittelwertes (px, py) mit einem Eingang, der so gekoppelt ist, daß er das Bewegungseffizienzsignal empfängt, und einem sogenannten Mittelwertausgang, um ein Signal zu liefern, das dem Mittelwert der Bewegungseffizienz über einem genannten zweiten, größeren Zeitintervall entspricht
   - Mittelwertvergleichsmittel (300) mit einem Eingang, der so gekoppelt ist, daß er den Mittelwert (px, py) der Bewegungseffizienz empfängt, und mit einem Ausgang, um das sogenannte Detektionssignal (R) zu liefern, wenn der Mittelwert eine vorab festgelegte Schwelle überschreitet.

3. Anordnung nach Anspruch 2, dadurch gekennzeichnet, daß sie folgendes umfaßt:

   - Mittel (30) zur Detektion der signifikanten Bewegungen mit einem Ausgang für ein sogenanntes Signal (fx, fy) für signifikante Bewegung, das die Anzahl von Teilintervallen des Intervalls repräsentiert, in dem das Objekt wenigstens eine vorab festgelegte minimale Distanz durchlaufen hat,
   - die genannten Mittel (101, 102) zur Bildung eines Mittelwertes (px, py) mit einem zusätzlichen Eingang, der so gekoppelt ist, daß er das Signal (fx, fy) für signifikante Bewegung empfängt, und die (101) eingerichtet sind, um das Bewegungseffizienzsignal mit dem Signal für signifikante Bewegung zu gewichten.

4. Anordnung nach einem der Ansprüche 1 bis 3, die zur Messung der Bewegungen des Objekts in einem mehrdimensionalen Raum eingerichtet ist, dadurch gekennzeichnet, daß sie eine Vielzahl (N) von ersten und zweiten Meßmitteln (100, 200,...) umfaßt, die jeweils mit Vergleichsmitteln (300) gekoppelt sind, wobei jeweils jedes der ersten und zweiten Meßmittel der Vielzahl eingerichtet ist, um die Signale (hx, gx, hy, gy) für gradlinige Bewegung (L1) und für effektive Distanz (L2) für die Bewegung und durchlaufene Distanz in einer Projektion entlang der jeweiligen räumlichen Richtungen zu bilden, und daß sie Kombinationsmittel (300) mit Eingängen umfaßt, die so gekoppelt sind, daß sie die jeweils aus jedem der Vergleichsmittel stammenden Selektionssignale empfangen, und einen sogenannten Kombinationsausgang für ein Selektionssignal (R) umfaßt, das verfügbar ist, wenn wenigstens eines der jeweiligen Selektionssignale die Selektion eines Objekts anzeigt.

5. Anordnung nach einem der Ansprüche 1 bis 4, dadurch gekennzeichnet, daß die ersten Meßmittel (10) folgendes umfassen:

- Mittel zur Messung von Einzelbewegung mit einem Ausgang zur Lieferung eines sogenannten Einzelbewegungssignals, das Einzelbewegungen des gemessenen Objekts in jeweiligen Einzelzeitintervallen repräsentiert,
- Mittel (12) zur rekursive Addition, mit einem Eingang, der so gekoppelt ist, daß er das Einzelbewegungssignal empfängt, um das Einzelbewegungssignal zu einem Anteil des vorherigen Wertes des Einzelbewegungssignals zu addieren und so durch Rekursion aufeinanderfolgende Werte des Signals (hx, hy) für gradlinige Bewegung (L1) zu bilden.

6. Anordnung nach einem der Ansprüche 1 bis 5, <u>dadurch gekennzeichnet,</u> daß die zweiten Meßmittel (20) folgendes umfassen:

- Einzelmeßmittel mit einem Ausgang, um ein sogenanntes Einzeldistanzsignal zu liefern, das von einem Objekt durchlaufene Einzeldistanzen, wie sie in jeweiligen Einzelzeitintervallen gemessen wurden, repräsentiert,
- Mittel (22) zur rekursiven Addition mit einem Eingang, der so gekoppelt ist, daß er das Einzeldistanzsignal empfängt, um das Einzeldistanzsignal zu einem Anteil des vorherigen Wertes des Signals für effektive Distanz zu addieren und so durch Rekursion aufeinanderfolgende Werte des Signals (gx, gy) für effektive Distanz (L2) zu bilden.

7. Anordnung nach einem der Ansprüche 1 bis 6, <u>dadurch gekennzeichnet,</u> daß die Mittel zur Bildung des Mittelwertes Mittel (102) zur rekursiven Addition umfassen, um die aufeinanderfolgenden Werte des Bewegungseffizienzsignals, gewichtet durch das genannte Signal für signifikante Bewegung, zu einem Anteil des vorherigen Wertes des dem Mittelwert des Bewegungseffizienz entsprechenden Signals zu addieren und so aufeinanderfolgende Werte des genannten, dem Mittelwert der Bewegungseffizienz entsprechenden Signals zu bilden.

## Claims

1. A device for supplying a selection signal which indicates the selective detection of physical objects on the basis of their movement along a trajectory (T), the device comprising

- first means (10), having a first output for a so-called linear displacement signal (hx, hy) which is representative of a measured quantity of displacement (L1) in a straight line by the object

between two points $(P_n.P_m)$ of the trajectory (T), which points are marked at two given instants which are separated by a first time interval $(\tau_1)$,
- second means (20), having a second output for a so-called effective distance (L2) signal (gx, gy) which is representative of the sum of the measured distances effectively travelled by the object during sub-intervals of said first time interval $(\tau_1)$,
- comparison means (101, 102, 300), having inputs coupled so as to receive the linear displacement (L1) signal (hx, hy) and the effective distance (L2) signal (gx, gy), and a so-called selection output for supplying a so-called selection signal (R) which indicates selection when the energy of the linear displacement signal exceeds a predetermined fraction of the energy of the effective distance signal.

2. A device as claimed in Claim 1, characterized in that the linear displacement and effective distance signals are dependent on time as functions of the position in the time interval, the comparison means comprising:

- means (101) for determining the movement efficiency, having inputs coupled so as to receive the linear displacement (L1) signal (hx, hy) and the effective distance (L2) signal (gx, gy), and a so-called movement efficiency output for supplying a movement efficiency signal which is the ratio of the linear displacement signal (hx, hy) to the effective distance signal (gx, gy),
- means (102) for forming an average (px, py), having an input coupled so as to receive the movement efficiency signal, and a so-called average output for supplying a signal corresponding to the average movement efficiency over a so-called second, longer time interval,
- means (300) for the comparison of averages, having an input coupled so as to receive the average (px, py) of the movement efficiency, and an output for supplying the so-called selection signal (R) when the average exceeds a predetermined threshold.

3. A device as claimed in Claim 2, characterized in that it comprises:

- means (30) for the detection of significant displacements, having an output for a so-called significant displacement signal (fx, fy) which is representative of sub-intervals of the interval in which the object has travelled at least a predetermined minimum distance,
- said means (101, 102) for forming an average (px, py) having a supplementary input coupled so as to receive the significant displacement signal (fx, fy) and arranged (101) to weight the movement efficiency signal by the significant displacement signal.

4. A device as claimed in any one of the Claims 1 to 3, arranged to measure movements of the object in a multi-dimensional space, characterized in that it comprises a plurality (N) of first and second measuring means (100, 200 ...) which are coupled to respective comparison means (300), each of the respective first and second measuring means of the plurality being arranged to form the linear displacement (L1) and effective distance (L2) signals (hx, hy; hy, gy) for the displacements and distances travelled in projection in respective spatial directions, and in that it comprises combination means (300), having inputs coupled so as to receive the selection signals from each respective comparison means, and a so-called combination output for a selection signal (R) which is available when at least one of the respective selection signals indicates the selection of an object.

5. A device as claimed in any one of the Claims 1 to 4, characterized in that the first measuring means (10) comprise:

- elementary displacement measuring means, having an output for supplying a so-called elementary displacement signal which is representative of elementary displacements of the object measured in respective elementary time intervals,
- recursive addition means (12), having an input coupled so as to receive the elementary displacement signal in order to add to the elementary displacement signal a fraction of the preceding value of the elementary displacement signal, thus forming by recurrence successive values of the linear displacement (L1) signal (hx, hy).

6. A device as claimed in any one of the Claims 1 to 5, characterized in that the second measuring means (20) comprise:

- elementary measuring means, having an output supplying a so-called elementary distance signal which is representative of the elementary distances travelled by the object as measured in the respective elementary time intervals,
- recursive addition means (22), having an input coupled so as to receive the elementary distance signal in order to add to the elementary distance signal a fraction of the preceding value of the effective distance signal, thus forming by recurrence successive values of the effective distance (L2) signal (gx, gy).

7. A device as claimed in any one of the Claims 1 to 6, characterized in that the means for forming the average comprise recursive addition means (102) for adding the successive values of the movement efficiency signal, weighted by said significant movement signal, and a fraction of the preceding value of the signal corresponding to the average movement efficiency, thus forming successive values of said signal corresponding to the movement efficiency average.

FIG.1

FIG.2

FIG.3